# EUROPÄISCHE PATENTSCHRIFT

(11) **EP 3 558 564 B1**
(45) Veröffentlichungstag und Bekanntmachung des Hinweises auf die Patenterteilung: **30.06.2021**
(21) Anmeldenummer: 17816810.0
(22) Anmeldetag: 15.12.2017
(51) Int. Cl.: B22D 19/00, B22D 19/16, B22D 21/00, B22D 19/02

(54) **DRUCKGUSSBAUTEIL**
DIE CAST COMPONENT
ÉLÉMENT DE COULÉE SOUS PRESSION

(30) Priorität: 22.12.2016 DE 102016225934
(43) Veröffentlichungstag der Anmeldung: 30.10.2019
(73) Patentinhaber: Bayerische Motoren Werke Aktiengesellschaft, 80809 München (DE)
(72) Erfinder: SCHITTENHELM, Dominik, 80638 München (DE); SEGAUD, Jean-Marc, 84034 Landshut (DE)
(86) Internationale Anmeldenummer: PCT/EP2017/082944
(87) Internationale Veröffentlichungsnummer: WO 2018/114632

(56) Entgegenhaltungen:
- EP-A2- 1 571 070
- DE-A1- 19 746 167
- DE-A1-102006 043 852
- US-A- 5 800 902
- US-A1- 2003 209 288
- US-A1- 2014 007 983
- US-A1- 2016 008 879

## Beschreibung

Die vorliegende Erfindung betrifft ein Druckgussbauteil, ein Verfahren zur Herstellung eines Gussbauteils sowie eine Verwendung eines Gießverfahrens.

Es ist bekannt, Bauteile, wie Aluminium-Gussteile, aus Leichtmetallen als Strukturbauteile, z. B. im Fahrzeugbau, einzusetzen, um Gewichtsreduktionen zu erzielen. Allerdings ist der Einsatz von Leichtmetallen in seinen Anwendungsgebieten eingeschränkt, da deren Steifigkeiten, beispielsweise im Verhältnis zu Stahl, deutlich geringer sind. Somit gibt es bei einigen Verwendungszwecken von Leichtmetall eine Diskrepanz zwischen ihrer Steifigkeit und dem zur Verfügung stehenden Bauraum. Oft werden die geforderten Steifigkeiten durch Verrippungen oder Materialanhäufungen erzielt. Der hierzu nötige Bauraum ist aber ggf. nicht vorhanden. Zudem wird viel Leichtbau-Potential verschenkt. Ein bekannter Ansatz ist daher die Umsetzung von Guss-Hybridbauteilen, welche auf der Kombination unterschiedlicher Materialien basieren. Problematisch ist in diesem Zusammenhang allerdings die dauerhafte Verbindung der unterschiedlichen Materialien bzw. Werkstoffe über die gesamte Lebensdauer der Bauteile hinweg. Um eine Verwendung in hochbelasteten Bereichen, beispielsweise für Strukturbauteile in Automotive-Anwendungen, zu ermöglichen, ist die Qualität und Dauerhaftigkeit der Verbindung der unterschiedlichen Materialien bzw. Werkstoffe aber unabdingbar.

Die US 2014/0007983 A1 betrifft ein Verfahren zum Herstellen eines Gegenstands aus einer amorphen Legierung mit einem schwammartigen Material als Einlegeelement.

Die EP 1 571 070 A2 betrifft ein Verbundbauteil, das eine Blechstruktur und eine an diese zumindest teilweise angegossene Leichtmetallstruktur umfasst, wobei in der Blechstruktur in einem Umgussbereich mit der Leichtmetallstruktur Durchbrechungen eingebracht sind und wobei die Blechstruktur zumindest im Umgussbereich mit einer Beschichtung versehen ist, die elektrisch isolierend wirkt.

Die DE 197 46 167 A1 betrifft ein Leichtmetallbauteil, hergestellt als Gussteil aus einem Leichtmetall und/oder einer Leichtmetalllegierung, aufweisend mindestens ein Anbauelement zur Verbindung mit an dem Leichtmetallbauteil anzuordnenden weiteren Bauteilen, wobei das mindestens eine Anbauelement ein Einlegeteil zum Einlegen in die Gießform des Gussteiles umfasst, das nach dem Gießen zumindest bereichsweise von dem Leichtmetall und/oder der Leichtmetalllegierung umschlossen ist.

Die US 2003/0209288 A1 betrifft ein Verfahren zur Herstellung eines Bauteils, wobei ein Werkstück aus einem ersten Material an einer ersten Fläche eine Vielzahl von Formschlusselementen aufweist. Das Werkstück wird in eine Form eingelegt und es wird ein zweites Material an die erste Fläche gegossen, sodass ein Formschluss mit den Formschlusselementen entsteht.

Die DE 10 2006 043 852 A1 betrifft ein Verbundgussteil, bestehend aus mindestens einem Einsatzteil und einem dieses Einsatzteil zumindest teilweise umgebendes Gussmaterial. Das Einsatzteil weist über dessen Fläche eine im Wesentlichen gleich bleibende Wandstärke auf und ist in zumindest einem Bereich in der Wandstärke reduziert.

Die US 2016/0008879 A1 betrifft ein Verfahren zum Verbinden einer amorphen Legierung mit einem heterogenen Material sowie ein entsprechendes Verbundbauteil.

Es ist daher eine Aufgabe der vorliegenden Erfindung, ein Gussbauteil, ein Gießverfahren sowie die Verwendung eines Gussbauteils anzugeben, welche die vorgenannten Nachteile beseitigen und dabei äußerst leicht, steif und kosteneffizient sind.

Diese Aufgabe wird durch ein Gussbauteil gemäß Anspruch 1, ein Gießverfahren gemäß Anspruch 9 sowie durch eine Verwendung gemäß Anspruch 10 gelöst. Weitere Vorteile und Merkmale ergeben sich aus den Unteransprüchen sowie der Beschreibung und den beigefügten Figuren.

Erfindungsgemäß umfasst ein Druckgussbauteil, aus einem Gusswerkstoff bzw. umfassend einen Gusswerkstoff, ein Einlegeelement, wobei das Einlegeelement eine Vielzahl von Formschlusselementen aufweist, welche zum formschlüssigen Verbinden des Einlegeelements mit dem Gusswerkstoff im Druckguss ausgelegt sind, und wobei ein Verhältnis einer Bauteilwandstärke zu einer Wandstärke des Einlegeelements bei maximal 4 liegt. Mit Vorteil ermöglichen die Formschlusselemente ein Verklammern des Einlegeelements mit dem Gusswerkstoff während des Druckgießprozesses. Zweckmäßigerweise wird ein, insbesondere rein, mechanisches Verbinden des Einlegeelements mit dem umgebenden Gusswerkstoff erreicht. Hierdurch wird sowohl eine dauerhafte Verbindung des Einlegeelements mit dem umgebenden Gusswerkstoff geschaffen als auch eine optimale Kraftübertragung in das deutlich steifere Einlegeelement gewährleistet. Betreffend eine optimale Steifigkeitserhöhung hat sich herausgestellt, dass ein entscheidender Faktor eine Dicke der Umgusswandstärke ist. Diese ist vorteilhafterweise möglichst gering. In bevorzugten Ausführungsformen liegt sie z.B. in einem Bereich von etwa 0,8 bis 2,5 mm, besonders bevorzugt in einem Bereich von etwa 1 bis 2 mm. Ist aus gießtechnischer Sicht eine 2 mm starke Umgusswandstärke notwendig, ist eine effiziente Steifigkeitserhöhung insbesondere ab Bauteilwandstärken von größer als 6 mm sinnvoll. Eine Wandstärke des Einlegeelements liegt dann vorteilhafterweise bei über 2 mm. Gemäß bevorzugten Ausführungsform liegt, insbesondere vor dem Hintergrund einer optimalen Steifigkeitserhöhung, das vorgenannte Verhältnis zwischen 1,1 und 3.

Übliche Drücke für das Druckgießen liegen in einem Bereich von etwa 600 bar.

Erfindungsgemäß sind die Formschlusselemente kreisrunde Löcher. In bevorzugten Ausführungsformen entspricht ein Abstand der Lochmittelpunkte 2 bis 3 Mal einer Wandstärke des Einlegeelements. Für eine bestmögliche Verstärkungswirkung hat sich ein Abstand von etwa 2,5 Mal die Wandstärke des Einlegeelements als optimal erwiesen.

Gemäß einer Ausführungsform entspricht der Lochdurchmesser der kreisrunden Löcher der Wandstärke des Einlegeelements. Alternativ ist der Lochdurchmesser bis zu 20 %, bevorzugt 10 %, größer oder kleiner als die Wandstärke des Einlegeelements.

Insbesondere handelt es sich bei den Formschlusselementen um "Löcher", welche nicht durchgängig (bezogen auf die Wandstärke des Einlegeelements) ausgebildet sind. Dadurch dass das Bauteil im Druckgussverfahren hergestellt bzw. gefertigt wird, ist es möglich, auch kleinste Löcher zu infiltrieren. Die Wahl der Geometrie hat einen entscheidenden Einfluss auf den Verstärkungsgrad und die Beständigkeit der Verbindung und muss einzelfallabhängig ausgelegt sein. Kreisförmige Löcher haben sich aufgrund der günstigen Kerbwirkung insbesondere hinsichtlich der Beständigkeit der Verbindung als sehr vorteilhaft erwiesen.

Zusätzlich ist auch eine Vielzahl von Vorsprüngen, beispielsweise in Form von Noppen, Stegen, Rillen oder dergleichen vorgesehen, um das vorgenannte "Verklammern" zu ermöglichen.

Bevorzugt erstrecken sich die erwähnten Löcher im Wesentlichen senkrecht, bezogen auf eine Ober- bzw. Außenfläche des (Druckguss)-Bauteils bzw. des Einlegeelements, können aber auch geneigt oder schräg dazu verlaufen. Die Lage der Formschlusselemente bzw. der Lochungen ist mit Vorteil lastspezifisch ausgelegt.

Erfindungsgemäß weist das Einlegeelement kreisrunde Löcher auf mit einem Durchmesser von etwa 2 bis 8 mm, bevorzugt mit einem Durchmesser von etwa 3 bis 6 mm, besonders bevorzugt mit einem Durchmesser von etwa 5 mm.

Zweckmäßigerweise liegt eine minimale Dicke des Gusswerkstoffs bzw. die das Einlegeelement umgebende Schichtdicke bei etwa 2 mm (oder auch mehr), zweckmäßigerweise, und soweit gießtechnisch möglich, aber auch niedriger, wodurch extrem dünnwandige, leichte und gleichzeitig steife Bauteile realisiert werden können. Idealerweise liegt die umgebende Schichtdicke bzw. die Umgusswandstärke z. B. bei etwa 1 bis 2 mm.

Grundsätzlich können die Formschlusselemente auch unterschiedlich ausgebildet sein, beispielsweise unterschiedlich große Löcher umfassen. Grundsätzlich gilt, dass die Steifigkeit des Einlegeelements umso weniger geschwächt wird, je kleiner z. B. die Löcher etc. sind bzw. je geringer deren Anzahl ist. Die Formschlusselemente ermöglichen die dauerhafte Verbindung des Einlegelements, sodass hier, bauteilspezifisch, ein optimaler Kompromiss, abhängig vom Einzelfall, gewählt werden muss.

Erfindungsgemäß handelt es sich bei dem Gusswerkstoff um ein Leichtmetall oder um eine Leichtmetalllegierung, z. B. aus Aluminium, Magnesium, Aluminiumlegierungen und/oder Magnesiumlegierungen. Zweckmäßigerweise kommen auch Aluminium-Silizium-Legierungen oder Aluminium-Magnesium-Legierungen zur Anwendung.

Das Einlegeelement ist aus einem Stahlwerkstoff hergestellt bzw. gefertigt. Zweckmäßigerweise ist das Einlegeelement aus einem Material gebildet, welches eine Umformbarkeit zu einer gewünschten Geometrie gewährleistet. Bevorzugt liegen die Festigkeiten des gewählten Materials deutlich über denen des Gusswerkstoffs bzw. der Gussmatrix.

Gemäß einer Ausführungsform ist das Einlegeelement ein Rundlochblech. Mit Vorteil sind die Formschlusselemente durch ein trennendes Fertigungsverfahren, wie z. B. durch ein Stanzverfahren, insbesondere Stanznieten, eingebracht, können aber auch gebohrt sein oder direkt bei bzw. durch die Fertigung des Einlegelements geformt werden.

Erfindungsgemäß sind die Formschlusselemente homogen bzw. gleichverteilt im Einlegeelement bzw. über das Einlegeelement hinweg angeordnet. Zweckmäßigerweise sind die Formschlusselemente also beispielsweise regelmäßig beabstandet bzw. matrixförmig oder schachbrettartig bzw. ring-, stern- oder strahlförmig angeordnet.

Zwischen den Formschlusselementen, d.h., den Löchern, sind Stege gebildet. Je nach Bauteilgeometrie können oder müssen Stege nicht gleich groß sein. Bevorzugterweise ist allerdings eine maximale Stegbreite etwa 1,5 bis 3 mal so groß, wie eine minimale Stegbreite. In bevorzugten Ausführungsformen liegt das Verhältnis der maximalen Stegbreite zur minimalen Stegbreite bei etwa 2.

Bevorzugt ist ein Abstand der Formschlusselemente zueinander im Wesentlichen gleich ausgebildet, wodurch sichergestellt wird, dass ein sehr gleichmäßiges Verbinden mit der Schmelze bzw. dem Gusswerkstoff erzielt werden kann. Gemäß einer bevorzugten Ausführungsform sind die Formschlusselemente kreisrunde, beispielsweise gestanzte, Löcher mit einem Durchmesser von etwa 5 mm, wobei deren Abstand z. B. in einem Bereich von etwa 1 bis 50 mm liegt. Fertigungstechnisch vorteilhaft entspricht ein Abstand von kreisrunden (gestanzten) Löchern zumindest deren Lochdurchmesser.

Gemäß einer Ausführungsform ist das Einlegeelement (zusätzlich) zumindest bereichsweise beschichtet bzw. mit einer Oberflächenbehandlung versehen.

Für eine Beschichtung eignen sich für das Einlegeelement aus einem Stahlwerkstoff beispielsweise die Materialien Zink, Kupfer und/oder Aluminium. Eine derartige Beschichtung, welche ggf. für sich allein keine zuverlässige und insbesondere dauerhafte Verbindung des Einlegeelements gewährleisten könnte, kann vorliegend die Funktion und Wirkungsweise der Formschlusselemente ideal unterstützen.

Durch die Beschichtung bzw. die Oberflächenbehandlung wird vorteilhafterweise ein gezieltes Anrauen bzw. Aufrauen der Oberfläche des Einlegeelements erreicht bzw. allgemeiner eine Oberfläche geschaffen, wodurch beim Umgießen ein Mikroformschluss geschaffen werden kann, da die Schmelze in die Vertiefungen in der Oberfläche eindringen kann, diese mit anderen Worte infiltriert. Eine derartige Infiltration der Oberflächen ist prozessbedingt im Druckguss möglich, da dieses Verfahren auch feinste Verklammerungen ermöglichen kann.

Gemäß einer Ausführungsform weist das Einlegeelement Formschlussabschnitte auf, in welchen die Formschlusselemente vorgesehen sind. Erfindungsgemäß sind die Formschlusselemente in diesen Formschlussabschnitten, wie bereits erwähnt, homogen bzw. gleichverteilt angeordnet. Daneben gibt es im Einlegeelement aber auch Bereiche, wo keine Formschlusselemente vorgesehen sind. Dies können beispielsweise Bereiche sein, in welchen das Einlegeelement bzw. das Gussbauteil eine Form aufweist, welche das Vorsehen von Formschlusselementen, beispielsweise in Form von Löchern, erschwert. Dies kann beispielsweise der Fall sein, wenn das Gussbauteil bzw. das Einlegeelement an einer Stelle einen sehr engen Radius vorsieht.

Gemäß einer Ausführungsform ist eine Wandstärke des Einlegeelements unterschiedlich ausgebildet, wobei typische Wandstärken in einem Bereich von etwa 1 bis 2 mm liegen. Ja nach verfügbarem Gussvolumen kann das Gussteil bis zu einer Restumgussstärke von etwa 2 mm ausgefüllt werden. Zweckmäßigerweise ist das Einlegeelement bzw. das Gussbauteil als solches topologieoptimiert, basiert also darauf, dass, beispielsweise durch ein computerbasiertes Berechnungsverfahren, eine günstige Grundgestalt ermittelt wurde.

Insofern findet vorliegend eine gezielte Funktionstrennung statt, da die mechanischen Eigenschaften des Einlegeelements, insbesondere durch dessen Wandstärke bzw. Grundform, nicht aber durch die Formschlusselemente eingestellt werden. Die Formschlusselemente sind zweckmäßigerweise dazu vorgesehen, eine bestmögliche Verbindung, beispielsweise durch die Infiltration mit dem umgebenden Gusswerkstoff zu ermöglichen.

Gemäß einer Ausführungsform ist das Einlegeelement zumindest bereichsweise doppelwandig und/oder hohl ausgebildet. Zweckmäßigerweise kann das Einlegeelement auch Hinterschneidungen oder Taschen bilden, wodurch die Steifigkeit des Einlegelements zusätzlich erhöht werden kann.

Daneben kann das Einlegeelement aber auch eine oder mehrere Aussparungen aufweisen. Durch derartige Aussparungen kann ein zusätzlicher Gewichtsvorteil gewonnen werden bzw. die Steifigkeit des Gussbauteils gezielt reduziert werden. Der Begriff "Aussparung" ist dahingehend zu verstehen, dass deren Größe, Diagonale oder Durchmesser um ein Vielfaches größer ist als die Wandstärke des Einlegeelements, beispielsweise mindestens 20-fach. Eine derartige Aussparung kann als Öffnung oder Loch, beispielsweise rund oder (mehr-)eckig, und/oder als ein Rücksprung im Einlegeelement ausgebildet sein.

Wie bereits erwähnt, ist das Einlegeelement aus einem Stahlwerkstoff gebildet. Bevorzugterweise ist ein Wärmeausdehnungskoeffizient des Einlegeelements im Verhältnis zum Matrixwerkstoff in einem Verhältnis von zwischen 1:1 und 1:2, bevorzugterweise aber von 1:1,5. In bevorzugten Ausführungsformen liegt ein Wärmeausdehnungskoeffizient des Einlegeelements, insbesondere eines Stahleinlegers, bei 10 bis 13 x 10⁻⁶1/K.

Gemäß einer Ausführungsform ist das Einlegeelement auch mittels eines generativen Fertigungsverfahrens hergestellt, wie beispielsweise selektives Laserschmelzen, Elektronenstrahlschmelzen oder selektives Lasersintern. Die additiven/generativen Fertigungsverfahren können den Vorteil mit sich bringen, dass bei der Herstellung des Einlegeelements als solchem auch direkt und integral die Formschlusselemente mit ausgebildet/geformt werden können. Ein weiterer Vorteil ist die absolute Gestaltungsfreiheit.

Zweckmäßigerweise liegt ein Verhältnis einer Steifigkeit eines Werkstoffs des Einlegeelements zu einer Steifigkeit des Gusswerkstoffs in einem Bereich von etwa 2 bis 4, besonders bevorzugt in einem Bereich von etwa 3. Bevorzugt liegen die E-Module der entsprechenden Werkstoffe in den genannten Bereichen. Mit Vorteil ist das Einlegeelement im Wesentlichen gleichmäßig, insbesondere mit gleicher oder konstanter Wandstärke, von dem Gusswerkstoff umgeben, mit anderen Worten, ummantelt. Bevorzugt ist das Einlegeelement möglichst steif, bei geringer relativer Dichte.

Gemäß einer Ausführungsform ist das Einlegelement durch ein Umformverfahren geformt, im Falle eines metallischen Einlegeelements beispielsweise durch ein Tiefziehverfahren. Alternativ oder zusätzlich ist auch zumindest teilweise eine spanende Bearbeitung, beispielsweise eines Vollmaterials, vorgesehen. Mit Vorteil weist das Einlegeelement eine Form des Druckgussbauteils auf bzw. bestimmt diese, zumindest bereichsweise. Mit anderen Worten kann z. B. an der Form des Einlegeelements, zumindest bereichsweise, bereits die Form des fertigen Gussbauteils erkennbar sein.

Gemäß einer Ausführungsform kann das Gussbauteil auch mehrere Einlegeelemente umfassen. Die Form des Gussbauteils ist dann beispielsweise durch eine Vielzahl von Einlegeelementen sozusagen zusammengesetzt, wobei sich diese Einlegeelemente beispielsweise hinsichtlich der Wandstärke oder des verwendeten Materials unterscheiden können. Gemäß einer Ausführungsform ist das Gussbauteil auch nur lokal bzw. bereichsweise durch das Einlegeelement verstärkt, beispielsweise in einem hochbelasteten Bereich oder im Bereich einer Fügestelle, wo das Bauteil verschraubt wird etc.

Bevorzugt ist das Einlegeelement gleichmäßig von bzw. mit dem Gusswerkstoff umgeben, wie bereits erwähnt, insbesondere ummantelt. Hierbei liegt ein Verhältnis einer Bauteil-Wandstärke zu einer Einlegeelement-Wandstärke in bevorzugten Ausführungsformen bei maximal 4. Gemäß einer Ausführungsform beträgt eine minimale Schichtdicke des Gusswerkstoffs etwa 2 mm oder mehr.

Bevorzugt ist das Einlegeelement vollständig umgossen bzw. von dem Gusswerkstoff umgeben. Mit Vorteil kann dadurch eine etwaige Kontaktkorrosionsproblematik umgangen werden (ein Zugang von Elektrolyt ist nicht möglich).

Durch das Einlegeelement können (lokale) Steifigkeitszunahmen im Gussbauteil bei reduziertem Bauraum und (wenigstens) Gewichtsneutralität erreicht werden. Insofern ist es vorteilhafterweise möglich, bei unveränderter Konstruktion, signifikante Steifigkeitszunahmen zu erzielen.

Weiter richtet sich die Erfindung auf ein Druckgussverfahren gemäß Anspruch 9 zum Herstellen eines Gussbauteils mit einem Einlegeelement, umfassend die Schritte:
- Vorbereiten eines Einlegeelements derart, dass ein Infiltrieren, ein Formschluss und/oder ein Mikroformschluss mit einem Gusswerkstoff erzielbar ist;
- Umgießen des Einlegeelements mit dem Gusswerkstoff derart, dass eine Umgusswandstärke kleiner als 2,5 mm ist.

Besonders bevorzugt liegt die Umgusswandstärke bei etwa 1 bis 2 mm. Um die Infiltration bzw. den Formschluss oder Mikroformschluss zu ermöglichen, handelt es sich bei dem Gießverfahren um ein Druckgussverfahren. Weiter umfasst das Verfahren dem Gießerei-Fachmann geläufige Verfahrensschritte, wie Einlegen des Einlegeelements in die (Druckguss-)Form etc.

Die Erfindung ist auch auf eine Verwendung eines erfindungsgemäßen Gießverfahrens zur Herstellung von Strukturbauteilen, insbesondere im Bereich Automotive bzw. Automobilbau, gerichtet. Typische Bauteile sind z. B. Federdome, Längsträger, A/B/C-Säulen etc. bzw. Rahmenbauteile etc.

Für das erfindungsgemäße Verfahren sowie für die erfindungsgemäße Verwendung gelten die im Zusammenhang mit dem Druckgussbauteil erwähnten Vorteile und Merkmale analog und entsprechend sowie umgekehrt. Weitere Vorteile und Merkmale ergeben sich aus der nachfolgenden Beschreibung von Gussbauteilen mit Bezug auf die beigefügten Figuren. Unterschiedliche Merkmale können dabei im Rahmen der in den Ansprüchen definierten Erfindung miteinander kombiniert werden.

Es zeigen:
- Fig. 1:: eine schematische Ansicht eines Gussbauteils, teilweise geschnitten;
- Fig. 2:: eine Schnittansicht einer weiteren schematischen Darstellung eines Gussbauteils;
- Fig. 3:: zwei perspektivische Ansichten eines Einlegeelements sowie eines Gussbauteils, teilweise geschnitten dargestellt;
- Fig. 4:: eine Schnittdarstellung eines Gussbauteils;
- Fig. 5:: eine Draufsicht auf eine Ausführungsform eines Einlegelements.

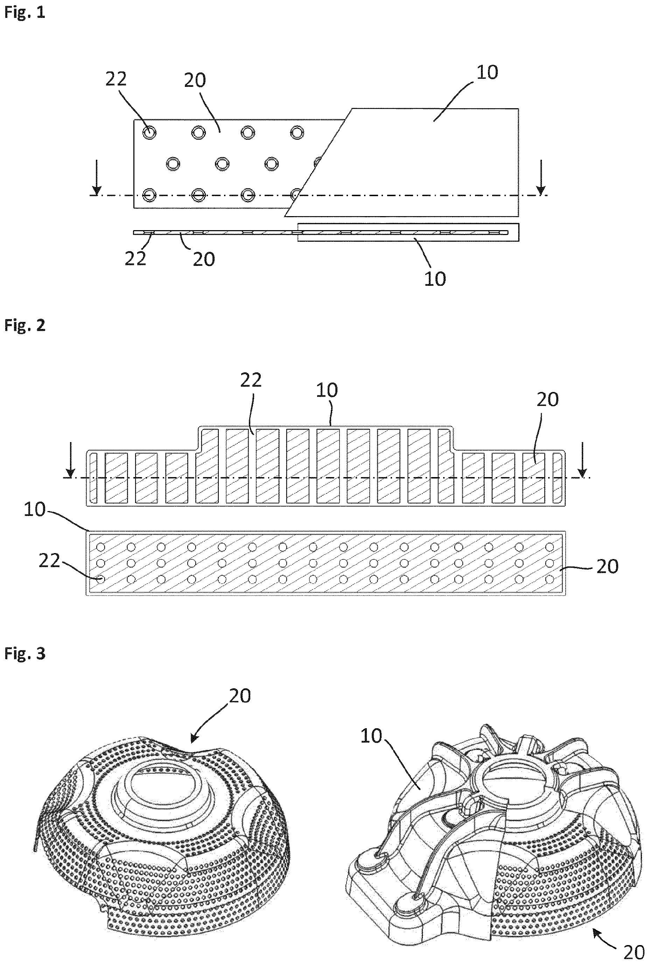

**Fig. 1** zeigt in der oberen Bildhälfte ein Gussbauteil, umfassend einen Gusswerkstoff 10, welcher ein Einlegeelement 20 umgibt bzw. ummantelt. Das Einlegeelement 20, umfassend eine Vielzahl von Formschlusselementen 22 (in der in Fig. 1 gezeigten schematischen Ansicht in Form von Löchern), ist nur teilweise von dem Gusswerkstoff 10 umgeben, liegt mit anderen Worten sozusagen frei, um den Grundaufbau besser erklären zu können. In einer unteren Bildhälfte ist, angedeutet durch die Schnittlinie, ein entsprechender Schnitt nach unten aufgeklappt, welcher zeigt, wie das Einlegeelement 20, umfassend die Formschlusselemente 22, innerhalb des Gusswerkstoffs 10 angeordnet ist bzw. wie die Formschlusselemente/Löcher 22 vom Gusswerkstoff 10 infiltriert oder durchdrungen sind.

**Fig. 2** zeigt in der oberen Bildhälfte eine Schnittdarstellung eines Einlegeelements 20, welches ebenfalls eine Vielzahl von Formschlusselementen 22, in der Form von durchgehenden Löchern, aufweist und von einem Gusswerkstoff 10 umgeben ist. Die Formschlusselemente 22 sind vom Gusswerkstoff 10 infiltriert. Über die Form des Einlegeelements 20, insbesondere über die unterschiedliche Wandstärke, wird ein hinsichtlich der Anforderungen topologieoptimiertes Bauteil geschaffen. Während also über die Formschlusselemente 22 die Verbindung mit dem Gusswerkstoff 10 sichergestellt wird, wird, über die Form des Einlegeelements 20 als solchem, dessen Festigkeits- und Steifigkeitsverhalten, und damit des gesamten Bauteils, eingestellt. In der unteren Bildhälfte ist ein entsprechender Schnitt nach unten aufgeklappt. Erkennbar sind so die im Wesentlichen kreisrunden Formschlusselemente 22.

**Fig. 3** zeigt in seiner linken Bildhälfte ein Einlegeelement 20, welches eine Vielzahl von Formschlusselementen 22 aufweist (ohne Bezugszeichen). In der rechten Bildhälfte ist das bekannte Einlegeelement in einen Gusswerkstoff 10 eingebettet bzw. ummantelt. Auf diese Weise wird ein Gussbauteil geschaffen, welches z. B. als Federdom Verwendung findet. Die Form des Einlegeelements 20 lässt bereits die Form des fertigen Bauteils erkennen. Der Gusswerkstoff 10, welcher in der hier gezeigten Ausführungsform auch einige Versteifungsrippen ausbildet, weist im Übrigen die Form des Einlegeelements 20 auf bzw. bildet diese nach. Das Einlegeelement 20 ist insofern mit im Wesentlichen konstanter Wandstärke von dem Gusswerkstoff 10 umgeben. Es wird ein äußerst dünnwandiges Bauteil geschaffen, welches extrem leicht, bei höchster Festigkeit, ist.

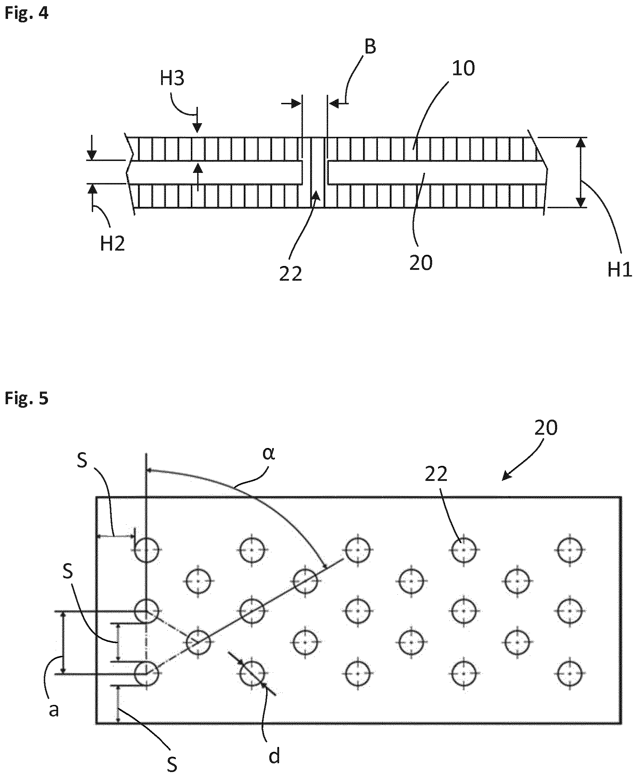

**Fig. 4** zeigt in einer Schnittdarstellung ein (Druck-)Gussbauteil, umfassend ein Einlegeelement 20, welches von Gusswerkstoff 10 ummantelt ist. Gekennzeichnet mit dem Bezugszeichen 22, ist ein Formschlusselement in Gestalt eines durchgehenden Loches zu erkennen. Zweckmäßigerweise liegt ein Verhältnis einer Wandstärke H1 des Druckgussbauteils im Bereich des Formschlusselements 22 zu einer (minimalen) Breite bzw. einem Durchmesser B des Formschlusselements 22 in einem Bereich von etwa 10 bis 0,2, vorliegend bei etwa 2,8. Hierbei liegt ein Verhältnis der Bauteil-Wandstärke H1 zu einer Einlegeelement-Wandstärke H2 in bevorzugten Ausführungsformen in einem Bereich von etwa 1,2 bis 3, vorliegend bei etwa 2,7. Bezugszeichen H3 bezeichnet eine Umgusswandstärke, welche in bevorzugten Ausführungsformen etwa 1 bis 2 mm beträgt. Es hat sich gezeigt, dass mit diesen Werten ein hohe spezifische Steifigkeitserhöhung realisiert werden kann.

**Fig. 5** zeigt eine Draufsicht auf ein Einlegeelement 20, umfassend eine Vielzahl von kreisrunden Formschlusselementen bzw. Löchern 22, gemäß einer bevorzugten Ausführungsform angeordnet in diagonal versetzten Reihen. Bezugszeichen a bezeichnet einen Abstand der Löcher 22 in einer Reihe. Bevorzugterweise entspricht der Abstand etwa 2,5 mal einem Durchmesser der Formschlusselemente, vorliegend einem Lochdurchmesser d. In der hier skizzierten Ausführungsform beträgt der Lochdurchmesser d etwa 5 mm. Eine Lochteilung in einem Winkel α von etwa 60° hat sich als optimal erwiesen. Mit dem Bezugszeichen S sind Stegbreiten bezeichnet. Um Spannungsspitzen im umgebenden Gusswerkstoff, beispielsweise in der Aluminiummatrix zu begrenzen, ist es besonders vorteilhaft, wenn die Stegbreiten S möglichst homogen sind. In der Praxis bedeutet dies, dass eine maximale Stegbreite etwa maximal 2 mal so groß ist, wie eine minimale Stegbreite.

### Bezugszeichenliste

- 10: Gusswerkstoff
- 20: Einlegeelement
- 22: Formschlusselement, Loch, Ausnehmung, Öffnung
- 24: Steg
- t: Teilung
- a: Abstand
- d: Durchmesser
- S: Stegbreite
- H1: Wandstärke Bauteil
- H2: Wandstärke Einlegeelement
- H3: Umgusswandstärke
- B: Durchmesser, Breite Formschlusselement (Loch, Öffnung)

## Patentansprüche

1. Druckgussbauteil,
aus einem Gusswerkstoff (10),
wobei der Gusswerkstoff (10) ein Leichtmetall oder eine Leichtmetalllegierung ist,
umfassend ein Einlegeelement (20) aus einem Stahlwerkstoff,
wobei das Einlegeelement (20) eine Vielzahl von homogen bzw. gleichverteilt angeordneten Formschlusselementen (22) aufweist, welche zum formschlüssigen Verbinden des Einlegeelements (20) mit dem Gusswerkstoff (10) ausgelegt sind, und
wobei ein Verhältnis einer Bauteilwandstärke (H1) zu einer Wandstärke (H2) des Einlegeelements (20) bei maximal 4 liegt,
wobei die Formschlusselemente (22) kreisrunde Löcher sind, und
wobei die Löcher einen Durchmesser von etwa 2 bis 8 mm aufweisen.

2. Druckgussbauteil nach Anspruch 1,
wobei ein Abstand (a) der Lochmittelpunkte 2 bis 3 Mal der Wandstärke (H2) des Einlegeelements (20) entspricht.

3. Druckgussbauteil nach Anspruch 1 oder 2,
wobei zwischen den Formschlusselementen (22) Stege (24) ausgebildet sind, und
wobei ein maximale Stegbreite (S) 1,4 bis 3 mal so groß wie eine minimale Stegbreite (S) ist.

4. Druckgussbauteil nach einem der vorhergehenden Ansprüche,
wobei eine Wandstärke des Einlegeelements (20) unterschiedlich ausgebildet ist.

5. Druckgussbauteil nach einem der vorhergehenden Ansprüche,
wobei das Einlegeelement (20) zumindest bereichsweise doppelwandig und/oder hohl ausgebildet ist.

6. Druckgussbauteil nach einem der vorhergehenden Ansprüche,
wobei das Einlegelement (20) eine oder mehrere Aussparungen aufweist.

7. Druckgussbauteil nach einem der vorhergehenden Ansprüche,
wobei ein Wärmeausdehnungskoeffizient des Einlegeelements (20) kleiner als 13 x 10⁻⁶ 1/K ist.

8. Druckgussbauteil nach einem der vorhergehenden Ansprüche,
wobei das Einlegeelement (20) gleichmäßig von bzw. mit dem Gusswerkstoff (10) umgeben ist.

9. Druckgussverfahren,
zum Herstellen eines Gussbauteils mit einem Einlegeelement (20), umfassend die Schritte:
- Bereitstellen eines Einlegeelements (20) aus einem Stahlwerkstoff mit einer Vielzahl von homogen bzw. gleichverteilt angeordneten kreisrunden Löchern als Formschlusselemente (22), wobei die Löcher einen Durchmesser von etwa 2 bis 8 mm aufweisen;
- Umgießen des Einlegeelements (20) mit dem Gusswerkstoff (10) derart, dass eine Umgusswandstärke (H3) kleiner als 2,5 mm ist und ein Verhältnis einer Bauteilwandstärke (H1) zu einer Wandstärke (H2) des Einlegeelements (20) bei maximal 4 liegt, wobei der Gusswerkstoff (10) ein Leichtmetall oder eine Leichtmetalllegierung ist.

10. Verwendung eines Gießverfahrens nach Anspruch 9 zur Herstellung von Strukturbauteilen, insbesondere für Automotive-Anwendungen.

## Claims

1. Die cast component,
composed of a casting material (10),
wherein the casting material (10) is a light metal or a light metal alloy,
comprising an insert element (20) composed of a steel material,
wherein the insert element (20) has a multiplicity of form-fitting elements (22) arranged homogeneously or in a uniformly distributed manner and designed for the form-fitting connection of the insert element (20) to the casting material (10), and
wherein a ratio of a component wall thickness (H1) to a wall thickness (H2) of the insert element (20) is at most 4,
wherein the form-fitting elements (22) are round holes, and
wherein the holes have a diameter of approximately 2 to 8 mm.

2. Die cast component according to Claim 1,
wherein a spacing (a) of the hole centre points corresponds to 2 to 3 times the wall thickness (H2) of the insert element (20).

3. Die cast component according to Claim 1 or 2,
wherein webs (24) are formed between the form-fitting elements (22), and
wherein a maximum web width (S) is 1.4 to 3 times the size of a minimum web width (S).

4. Die cast component according to one of the preceding claims,
wherein a wall thickness of the insert element (20) is designed to differ.

5. Die cast component according to one of the preceding claims,
wherein the insert element (20) is designed to be double-walled and/or hollow at least in certain regions.

6. Die cast component according to one of the preceding claims,
wherein the insert element (20) has one or more cutouts.

7. Die cast component according to one of the preceding claims,
wherein a coefficient of thermal expansion of the insert element (20) is less than 13 x 10⁻⁶ 1/K.

8. Die cast component according to one of the preceding claims,
wherein the insert element (20) is uniformly surrounded by or with the casting material (10).

9. Die casting method
for producing a cast component having an insert element (20), comprising the following steps:
- providing an insert element (20) composed of a steel material having a multiplicity of circular holes arranged homogeneously and/or in a uniformly distributed manner in the form of form-fitting elements (22), wherein the holes have a diameter of approximately 2 to 8 mm;
- encapsulating the insert element (20) with the casting material (10) in such a way that an encapsulating wall thickness (H3) is less than 2.5 mm and a ratio of a component wall thickness (H1) to a wall thickness (H2) of the insert element (20) is at most 4, wherein the casting material (10) is a light metal or a light metal alloy.

10. Use of a casting method according to Claim 9 for producing structural components, in particular for automotive applications.

## Revendications

1. Composant moulé sous pression,
obtenu à partir d'un matériau de moulage (10),
le matériau de moulage (10) étant un métal léger ou un alliage de métal léger,
ledit composant comprenant un élément d'insertion (20) obtenu à partir d'un matériau formé d'acier,
l'élément d'insertion (20) comportant une multitude d'éléments à complémentarité de formes (22) répartis de manière homogène ou uniforme qui sont conçus pour relier par complémentarité de formes l'élément d'insertion (20) au matériau de moulage (10), et
un rapport d'une épaisseur de paroi de composant (H1) à une épaisseur de paroi (H2) de l'élément d'insertion (20) étant au maximum de 4,
les éléments à complémentarité de formes (22) étant des trous circulaires, et
les trous ayant un diamètre de 2 à 8 mm environ.

2. Composant moulé sous pression selon la revendication 1,
une distance (a) des centres des trous correspondant à 2 à 3 fois l'épaisseur de paroi (H2) de l'élément d'insertion (20).

3. Composant moulé sous pression selon la revendication 1 ou 2,
des nervures (24) étant formées entre les éléments à complémentarité de formes (22), et
une largeur de nervure maximale (S) étant de 1,4 à 3 fois plus grande qu'une largeur de nervure minimale (S) .

4. Composant moulé sous pression selon l'une des revendications précédentes,
une épaisseur de paroi de l'élément d'insertion (20) étant conçue différemment.

5. Composant moulé sous pression selon l'une des revendications précédentes,
l'élément d'insertion (20) étant au moins par zones à double paroi et/ou creux.

6. Composant moulé sous pression selon l'une des revendications précédentes, l'élément d'insertion (20) comportant un ou plusieurs évidements.

7. Composant moulé sous pression selon l'une des revendications précédentes,
un coefficient de dilatation thermique de l'élément d'insertion (20) étant inférieur à 13 x 10⁻⁶ 1/K.

8. Composant moulé sous pression selon l'une des revendications précédentes,
l'élément d'insertion (20) étant uniformément entouré par ou avec le matériau de moulage (10).

9. Procédé de moulage sous pression,
destiné à la production d'un composant coulé avec un élément d'insertion (20), ledit procédé comprenant les étapes suivantes :
- fournir un élément d'insertion (20) réalisé en un matériau en acier avec une multitude de trous circulaires répartis de manière homogène ou régulière en tant qu'éléments à complémentarité de formes (22), les trous ayant un diamètre d'environ 2 à 8 mm ;
- enrober l'élément d'insertion (20) avec le matériau de moulage (10) de telle sorte qu'une épaisseur de paroi environnante (H3) soit inférieure à 2,5 mm et un rapport d'une épaisseur de paroi de composant (H1) à une épaisseur de paroi (H2) de l'élément d'insertion (20) étant au maximum de 4, le matériau de moulage (10) étant un métal léger ou un alliage de métal léger.

10. Utilisation d'un procédé de moulage selon la revendication 9 pour la réalisation de composants de structure, en particulier pour des applications automobiles.
